# DEMANDE DE BREVET EUROPEEN

(11) **EP 2 256 676 A1**
(43) Date de publication de la demande: **01.12.2010**
(21) Numéro de dépôt: 10161790.0
(22) Date de dépôt: 03.05.2010
(51) Int. Cl.: G06Q 10/00

(54) **Gestion de contacts d'un répertoire électronique de terminal**

(30) Priorité: 29.05.2009 FR 0953570
(71) Demandeur: France Telecom, 75015 Paris (FR)
(72) Inventeur: Clavier, Eric, 22560, TREBEURDEN (FR); Clec'h, Armelle, 22300, LANNION (FR); Cauchie, Dany, 22700, PERROS-GUIREC (FR)
(74) Mandataire: Cabinet Plasseraud

(57) **Abrégé**

L'invention concerne la gestion de données de contact d'un répertoire électronique notamment dans un terminal de télécommunication. Au sens de l'invention, on applique une identification d'un groupe de données (S5) parmi les données d'un contact, et on déclenche une action (S 10, S11) auprès du terminal en fonction du groupe de données identifiées, notamment pour un stockage optimum de ces données auprès du terminal ou pour envoyer une notification de stockage de ces données à un utilisateur correspondant à ce contact.

## Description

L'invention concerne la diffusion et le stockage de données personnelles sous forme de carte de visite électronique, ainsi que la gestion d'un répertoire de contacts, stocké sous forme de données numériques notamment en mémoire d'un terminal.

De tels répertoires agrémentent des logiciels de communication par exemple pour l'édition et l'envoi/la réception de courriers électroniques ou de messages de type SMS ou MMS (respectivement pour « Short Message Service » et « Multimedia Message Service »), ou encore des logiciels de mise en relation en ligne sur le réseau Internet.

De tels modules logiciels permettent bien l'ajout de cartes de visite comme contacts dans un répertoire (appelé encore dans certaines applications « carnet d'adresses électronique »). Toutefois, un simple ajout de contact à un seul répertoire ne développe pas particulièrement l'interaction et les échanges avec ce contact.

La présente invention vient améliorer la situation.

Elle propose de multiplier l'ajout de contacts dans des répertoires auprès de terminaux distincts pour favoriser la communication entre personnes correspondant à ces contacts, ou l'ajout de contacts dans des catégories différentes d'un répertoire d'un même terminal pour augmenter la sélectivité des contacts.

A cet effet, l'invention se fonde en particulier sur une caractéristique préférentielle de reconnaissance d'un champ de données parmi l'ensemble des données d'un contact, et l'interprétation des données de ce champ permet de décider d'une action liée notamment au stockage de ce contact dans un répertoire. Des possibilités d'actions liées au stockage d'un contact font l'objet de modes de réalisation décrit ci-après.

Tout d'abord, l'invention vise un procédé mis en oeuvre par des moyens informatiques d'un premier terminal (au sens où il est automatisé et ne fait pas intervenir l'action d'un utilisateur de ce terminal). Ce procédé vise le traitement de données de contact d'un utilisateur d'un deuxième terminal, ces données de contact étant destinées par exemple à être stockées dans un répertoire électronique du premier terminal.

Le procédé au sens de l'invention comporte en particulier :
- une identification d'un groupe de données parmi les données de contact, et
- le déclenchement d'une action auprès du premier terminal en fonction de ce groupe de données identifiées.

Dans une première mise en oeuvre possible de l'invention, on prévoit une fonctionnalité qui consiste à faire en sorte qu'un terminal de télécommunication, qui reçoit les données de contact d'un tiers pour qu'elles soient stockées dans un répertoire du terminal, renvoie automatiquement les données de contact de son propre utilisateur au terminal de ce tiers.

Ainsi, on utilise ici le principe général de l'invention et le procédé comporte :
- une reconnaissance, parmi les données de contact reçues, de données identifiant le deuxième terminal (le terminal du tiers précité), et
- la formation d'un message destiné à être communiqué au deuxième terminal, en fonction des données identifiant le deuxième terminal.

Ce message peut être du type : « *Vous avez été enregistré dans le répertoire de contacts de Monsieur X Souhaitez-vous aussi enregistrer ses coordonnées dans votre répertoire de contacts ?* ». Si la réponse de l'utilisateur du premier terminal est oui, les données de contact de l'utilisateur du premier terminal seront aussi stockées dans un répertoire du deuxième terminal.

Ainsi, le message formé peut comporter des données de contact d'un utilisateur du premier terminal et, dans une réalisation optionnelle avantageuse, le message formé comporte en outre une invitation à stocker, auprès du deuxième terminal, les données de contact de l'utilisateur du premier terminal.

En particulier, on comprendra ici que le premier terminal lit dans les données de contact de l'utilisateur du deuxième terminal un champ de données d'adresse de messagerie ou de numéro d'abonné, ou autre, pour adresser le message précité à cette adresse ou à ce numéro.

Ainsi, si les données identifiant le deuxième terminal comportent un numéro d'appel du deuxième terminal, le message précité sera envoyé sous la forme d'un message court. On entend par « *message court* » tout message envoyé/reçu sur téléphone mobile, de type SMS (« *Short Message Service* »), MMS (« *Multimedia Message Service* ») ou autres nouvelles et futures générations.

En complément ou dans une autre variante possible, si par exemple les données identifiant le deuxième terminal comportent une adresse de messagerie du deuxième terminal, le message sera envoyé en tant que courriel, par messagerie électronique.

La première mise en oeuvre précitée peut impliquer deux utilisateurs de terminaux : une première personne envoie ses coordonnées de contact par son terminal A à une deuxième personne qui reçoit ces coordonnées sur son terminal B. Dans ce cas, le terminal B de la deuxième personne, sur réception de ces coordonnées, renvoie alors le message précité avec éventuellement ses propres coordonnées de contact (par conséquent, les coordonnées de la deuxième personne précitée, utilisant le terminal B).

La première mise en oeuvre de l'invention peut aussi impliquer plus de deux utilisateurs de terminaux. On peut prévoir par exemple le cas d'un terminal B' d'un tiers intermédiaire transférant le contact d'une première personne utilisant un terminal A' au terminal C' d'une deuxième personne. Dans ce cas, l'invention est mise en oeuvre auprès du terminal C' pour :
- lire l'adresse ou le numéro d'abonné de la première personne utilisant le terminal A', et
- envoyer le message précité avec éventuellement les coordonnées de contact de l'utilisateur du terminal C'.

Ainsi, dans ce cas, en reprenant les termes généraux utilisés précédemment pour la présentation générale de l'invention, on peut prévoir que les données de contact de l'utilisateur du deuxième terminal (A') soient envoyées au premier terminal (C') par un tiers intermédiaire. Si ce tiers intermédiaire est par exemple une personne physique, le tiers intermédiaire peut être l'utilisateur d'un troisième terminal (B').

Néanmoins, le tiers intermédiaire peut être une personne physique, ou, en variante, être un serveur distant, dans le cadre d'un service de gestion de contacts, de messagerie de rencontres professionnelles ou personnelles et/ou de mise en relation. A ce titre, la présente invention vise en outre un tel serveur, comportant des moyens de stockage de bases de données de contact, et des moyens de gestion de transfert de données de contact entre terminaux d'utilisateurs.

Dans une deuxième mise en oeuvre possible de l'invention, qui peut être complémentaire de la première mise en oeuvre précitée, on peut prévoir que le répertoire électronique du premier terminal comporte plusieurs catégories de contacts, par exemple les contacts professionnels ou les contacts rencontrés dans un cadre privé. On peut prévoir alors que les données de contact de l'utilisateur du deuxième terminal soient stockées dans une catégorie du répertoire électronique sélectionnée en fonction d'un instant d'entrée des données auprès du premier terminal, en vue d'un classement du contact dans le répertoire en fonction d'un contexte temporel d'entrée des données du contact (heure de rencontre notamment). On entend par « *instant d'entrée des données de contact* » le moment où l'utilisateur entre manuellement les données de contact d'un tiers, ou encore le moment où le terminal reçoit, d'un autre terminal, les données de contact de ce tiers.

On peut supposer par exemple qu'un contact entré après une heure donnée de la journée (20 heures par exemple) corresponde à une personne rencontrée dans un cadre privé et non professionnel, alors qu'une personne rencontrée entre 8 et 20 heures serait plutôt un contact professionnel.

La deuxième mise en oeuvre de l'invention peut avantageusement consister, dans ce cas, à prévoir :
- avant le stockage des données de contact de l'utilisateur du deuxième terminal dans le répertoire électronique du premier terminal, une reconnaissance, parmi les données de contact, de données identifiant au moins une horodate d'entrée auprès du premier terminal des données de contact de l'utilisateur du deuxième terminal, et
- un stockage des données de contact de l'utilisateur du deuxième terminal dans une catégorie du répertoire électronique sélectionnée en fonction de cette horodate.

On entend par « *horodate* » une heure et éventuellement une date de rencontre. Par exemple, si la rencontre a lieu un jour de semaine (hors week-end) entre 8 et 20 heures, le contact est a priori professionnel, sauf si un agenda électronique stocké aussi dans le terminal indique qu'il s'agit d'un jour renseigné en tant que jour de congé.

L'invention peut être mise en oeuvre en outre pour trier les informations utiles à la catégorie de contact sélectionnée. Par exemple, on peut prévoir une reconnaissance, parmi les données de contact, d'un groupe de données non pertinentes par rapport à la catégorie sélectionnée, et une élimination de telles données non pertinentes de la catégorie sélectionnée. Par exemple, si la rencontre se fait dans un contexte non professionnel mais privé, les données professionnelles (telles que l'entreprise dans laquelle travaille le tiers, le titre de son poste, une adresse url sur une page de site web de mise en relation professionnelle, ou autre) peuvent être supprimées car non pertinentes dans une catégorie de contacts non professionnels. On peut prévoir que le terminal affiche un message de confirmation avant d'effacer ces données. On peut prévoir aussi, de façon avantageuse, que le terminal puisse stocker deux fois ce contact :
- une première fois dans la catégorie des contacts privés, avec par exemple le numéro d'abonné en téléphonie mobile, une adresse de messagerie privée, etc., et
- une deuxième fois dans la catégorie des contacts professionnels, du même répertoire électronique, avec les coordonnées professionnelles de ce contact, ce qui évite de supprimer définitivement ces données.

Ainsi, dans cette réalisation, les données non pertinentes sont stockées dans le répertoire, dans une catégorie distincte de ladite catégorie sélectionnée.

On indique que certains carnets d'adresses électroniques connus sont répertoriés de façon suffisamment exhaustive pour inclure ces différentes données :
- nom complet,
- titre,
- société,
- numéro de téléphone bureau,
- numéro de téléphone domicile,
- numéro de télécopie,
- numéro de téléphone mobile,
- adresse physique bureau,
- adresse physique personnelle,
- adresse de messagerie bureau,
- adresse de messagerie personnelle, etc.

On peut alors définir au préalable les champs de ces différentes données et extraire les données de certains champs choisis en fonction d'une catégorie de contact pour créer un nouveau contact avec ces données dans cette catégorie de contact.

Cette fonctionnalité aussi est avantageuse : elle permet effectivement à un utilisateur souhaitant diffuser des informations différentes, selon le contexte ou les personnes avec lesquelles il communique, de créer automatiquement différents contacts (appelés aussi ci-après « *cartes de visite électroniques* »), dont chacun comprend les données appropriées et sélectionnées en fonction de la catégorie du contact.

La présente invention vise aussi un programme informatique comportant des instructions pour la mise en oeuvre du procédé selon l'invention, lorsque ce programme est exécuté par un processeur. Un exemple d'algorithme d'un tel programme est décrit ci-après en référence à l'un des dessins annexés et représentant schématiquement un organigramme du programme.

La présente invention vise aussi un module de gestion de données de contacts dans un répertoire électronique d'un terminal, comportant :
- des moyens d'identification d'un groupe de données parmi des données d'un contact, et
- des moyens pour déclencher une action auprès du terminal en fonction du groupe de données identifiées.

Un tel module peut typiquement utiliser un processeur pour exécuter le programme informatique précité.

D'autres caractéristiques et avantages de l'invention apparaîtront à l'examen de la description détaillée ci-après, et des dessins annexés sur lesquels :
- les figures 1A et 1B illustrent des systèmes généraux respectifs de mises en oeuvre possibles de l'invention ;
- la figure 2A représente schématiquement une structure de données de contact telle une carte de visite électronique ;
- la figure 2B représente schématiquement des éléments d'un module de gestion de contact d'un terminal, dans un exemple de réalisation de l'invention ;
- les figures 3A et 3B illustrent schématiquement les cas respectifs d'un envoi de données de contact entre deux utilisateurs de terminaux et d'une transmission de données de contact par un tiers intermédiaire ;
- la figure 4 est un organigramme illustrant le traitement des données de contact dans l'un ou l'autre des cas des figures 3A et 3B, dans la première mise en oeuvre précitée de l' invention ;
- la figure 5A illustre schématiquement le cas d'une entrée de données de contact et la sélection d'une catégorie de contact en fonction d'un instant d'entrée des données de contact ; et
- la figure 5B est un organigramme illustrant le traitement des données de contact dans le cas de la figure 5A, dans la deuxième mise en oeuvre précitée de l'invention.

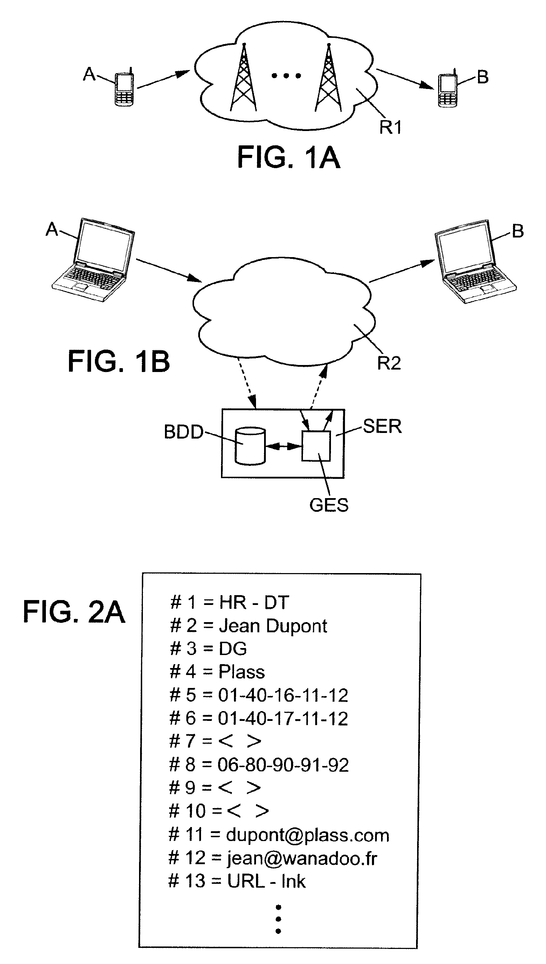

On se réfère tout d'abord à la figure 1A sur laquelle un terminal A peut communiquer avec un terminal B via un premier type de réseau de télécommunication R1 (dans l'exemple représenté un réseau GSM portant un appel téléphonique ou, dans le contexte de l'invention, un message de type SMS ou MMS). On a représenté sur la figure 1B un autre exemple où un terminal A peut communiquer avec un terminal B via un deuxième type de réseau R2, tel qu'un réseau étendu (Internet typiquement) et portant notamment des messages sous forme de courriers électroniques. Dans le contexte de l'invention, de tels messages peuvent comporter des données de contact, auquel cas on peut prévoir un serveur intermédiaire de gestion des contacts SER, comportant une base de données des contacts BDD et des moyens GES de gestion de cette base pour le stockage et le transfert des données de contact. Bien entendu, on peut prévoir aussi un tel serveur SER dans la mise en oeuvre de la figure 1A. On indique en outre que des terminaux sont actuellement capables de communiquer à la fois via le réseau GSM et le réseau IP, donc dans l'une et/ou l'autre des configurations représentées sur les figures 1A et 1B.

En référence maintenant à la figure 2A, des données de contact sont classées par champs successifs, par exemple :
- #1 : instant d'entrée des données d'un contact auprès d'un terminal (entrée manuelle ou réception des données a partir d'un réseau R1 ou R2), le signe HR-DT de la figure 2A signifiant qu'il est possible de renseigner ici à la fois l'heure et la date d'entrée des données du contact,
- #2 : nom complet du contact,
- #3 : son poste dans la société qui l'emploie,
- #4 : sa société,
- #5 : son numéro de téléphone au bureau,
- #6 : son numéro de téléphone de domicile,
- #7 : un numéro de télécopie professionnel (le signe < > de la figure 2A signifiant que le champ correspondant n'est pas renseigné),
- #8 : son numéro de téléphone mobile,
- #9 : son adresse physique au bureau,
- #10 : son adresse physique personnelle,
- #11 : une adresse de messagerie au bureau,
- #12 : une adresse de messagerie personnelle,
- #13 : adresse url vers un site web de rencontre et de mise en relation professionnelle donnant les coordonnées de contact de l'utilisateur du terminal, etc.

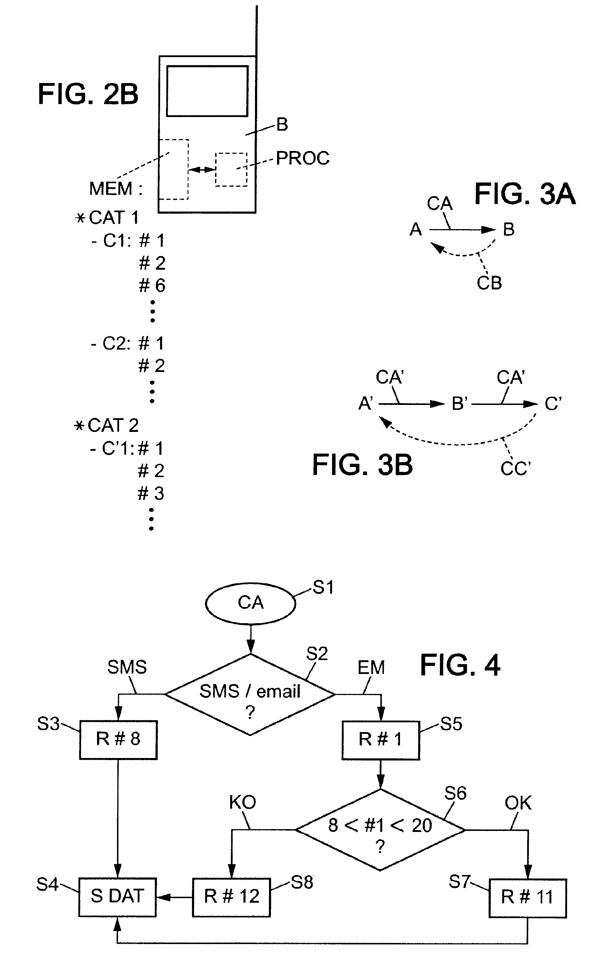

En référence à la figure 2B, sur réception des données de contact de l'utilisateur du terminal A (de l'une ou l'autre des figures 1A et 1B), le terminal B stocke en mémoire MEM ces données. On peut prévoir par exemple que la mémoire MEM soit adressable et que les données de contact soient rangées en adresses mémoires, par catégories de contact CAT1 (catégorie des contacts personnels C1, C2, etc.), CAT2 (catégorie des contacts professionnels C'1), et dans chaque catégorie, par contact C1, C2, etc., et dans chaque contact, par champ de données #1, #2, #6, etc.

En particulier, le terminal B comporte un module de gestion de données de contacts dans un répertoire électronique du terminal, comportant :
- des moyens d'identification d'un groupe de données (dans un champ) parmi des données de contact, et
- des moyens pour déclencher une action auprès du terminal en fonction du groupe de données identifiées.

On peut prévoir matériellement un programme informatique stocké dans une mémoire de travail et qui, lorsqu'il est exécuté par un processeur PROC du terminal B, assure le déroulement des opérations suivantes :
- identification de l'un des champs d'un contact (#1, #8, #11 par exemple),
- lecture des données de ce champ, et
- déclenchement d'une action prédéterminée (respectivement « *classer dans une catégorie appropriée* », « *répondre par un message SMS en envoyant les données de contact de l'utilisateur du terminal B* », « *répondre par un courriel en envoyant les données de contact de l'utilisateur du terminal B* »).

On décrit ci-après des exemples d'actions ainsi déclenchées. On a représenté sur la figure 3A la situation dans laquelle le terminal A envoie au terminal B les données de contact CA de l'utilisateur du terminal A. Sur réception de ces données CA auprès du terminal B, les opérations suivantes peuvent par exemple être exécutées :
- signalisation à destination de l'utilisateur du terminal B (émission d'un bip et affichage d'un message) de la réception des données de contact CA, avec requête d'autorisation de réponse en envoyant les données de contact CB de l'utilisateur du terminal B à destination du terminal A,
- en cas de réponse positive de l'utilisateur du terminal B à la requête, lecture d'un champ de données d'adresse (#11) ou de numéro d'abonné (#8) auxquels une réponse peut être adressée,
- envoi des données de contact CB de l'utilisateur du terminal B au terminal A.

Ainsi, en référence à la figure 4, suite à la réception des données CA auprès du terminal B (étape S1 de la figure 4), on peut prévoir en outre que le terminal B identifie un mode de réception des données CA (test S2) : par message SMS ou par courriel, par exemple. Dans le premier cas (flèche SMS en sortie du test S2), le module de gestion des contacts lit le champ #8 pour en déduire un numéro d'abonné (étape S3) et envoyer les données de contact CB (étape S4) par message SMS ou MMS ou autre. Dans le deuxième cas (flèche EM pour « *E-Mail* » en sortie du test S2), le module de gestion des contacts lit en outre le champ #1 (étape S5), pour déterminer s'il s'agit d'un contact personnel ou professionnel (test S6) selon l'heure de réception du contact par exemple (comme on le verra plus loin), et, en fonction de ce test S6, lit le champ d'adresse de messagerie personnelle #12 ou professionnelle #11 pour y envoyer par courriel les données de contact CB (étape S4). Bien entendu, si l'un des champs #11 ou #12 n'est pas renseigné, le courriel est envoyé à l'adresse de messagerie indiquée dans l'autre champ. Si aucun des champs #11 et #12 n'est renseigné, on peut prévoir de transmettre au terminal A un courriel comportant une adresse url d'un site de rencontre professionnelle #13, sur lequel l'utilisateur du terminal A peut récupérer les données de contact CB.

Plus généralement, on peut aussi prévoir d'envoyer au terminal A, dans un premier temps, une notification pour demander à l'utilisateur du terminal A s'il accepte de recevoir les données de contact de l'utilisateur du terminal B et mener l'étape S4 en cas de réponse positive.

Le déroulement du procédé de la figure 4 est sensiblement le même dans la situation de la figure 3B où le terminal A' envoie à un terminal intermédiaire B' les données de contact CA' de l'utilisateur du terminal A' et le terminal de l'utilisateur B' transfert ces données CA' au terminal C'. Sur réception de ces données CA' auprès du terminal C', le terminal C' identifie une adresse de réponse dans les données CA' et transmet les données de contact CC' de l'utilisateur du terminal C' (sous réserve d'acceptation de cet utilisateur et de l'utilisateur du terminal A').

On indique en outre que le serveur SER de la figure 1B peut jouer ici le rôle d'intermédiaire pour transférer les données de contact du terminal A' vers le terminal C' et du terminal C' vers le terminal A', et pour gérer les messages de notification et d'acceptation de réception des données. On peut prévoir par exemple que le serveur SER:
- notifie au terminal C' l'émission par le terminal A' de données CA' destinées au terminal C' dans un message invitant le terminal C' à récupérer ces données CA' auprès du serveur SER,
- sur réception, le terminal C' lit les données CA' pour déterminer si une réponse doit être formulée ou si le contact doit être rangé dans une catégorie particulière, ou autre,
- le terminal C' peut répondre directement au terminal A' en lisant le champ d'adresse adéquat dans les données CA'.

Dans une réalisation, le serveur SER peut être encore utilisé pour transmettre la réponse du terminal C' au terminal A' en particulier si les modes de communication des terminaux A' et C' ne sont pas adaptés entre eux. En effet, si le terminal A' ne peut pas communiquer par exemple par messagerie électronique et ne peut communiquer que par messages SMS, aucune adresse de messagerie électronique n'étant indiquée dans les données CA', le terminal C' peut lire les données CA' et déterminer que la réponse du terminal C' doit être envoyée par courriel au serveur SER qui la transmet ensuite sous forme de message SMS au terminal A'.

Ainsi, la mise en oeuvre de l'invention permet d'exécuter des applications telles que la suivante : lorsqu'un utilisateur du terminal B ajoute le contact utilisateur du terminal A dans son carnet d'adresses électroniques, le programme précité du module de gestion des contacts du terminal B exécute l'envoi de la carte de visite électronique de l'utilisateur du terminal B, éventuellement avec un contexte associé (par exemple en fonction des données liées à leur rencontre, notamment l'heure et la date). Ainsi, l'utilisateur du terminal B est ajouté au carnet d'adresses du terminal A sans nécessiter d'intervention de l'utilisateur du terminal A. De plus, le carnet d'adresses du terminal A mémorise éventuellement les données liées à la rencontre (par exemple l'heure et la date indiquées dans le champ #1).

On peut prévoir aussi un suivi de la circulation d'une carte de visite électronique par son propriétaire. L'utilisateur du terminal A' donne sa carte de visite électronique à l'utilisateur du terminal B'. On peut prévoir que la carte de visite électronique soit initialement une image qui encode une url sur un serveur SER qui répertorie les cartes de visites électroniques, par exemple à l'adresse url indiquée dans le champ #13 et que les données de tous les champs (#1 à #12) puissent être rapatriées de cette adresse url. L'utilisateur du terminal B' peut transmettre ensuite la carte à un tiers (utilisateur du terminal C'). L'utilisateur du terminal A' est alors averti et peut éventuellement recevoir les données de contact de l'utilisateur du terminal C'. Le tiers devient alors un contact dans le carnet d'adresses de l'utilisateur du terminal A' avec un contexte qui indique éventuellement que l'utilisateur du terminal C' est une personne jamais rencontrée. Le contexte peut indiquer en outre que la carte visite a été reçue par l'utilisateur du terminal B'.

De plus, le contenu de la carte de visite de l'utilisateur du terminal B peut dépendre du contexte de rencontre. Si la rencontre se fait dans un contexte professionnel, la carte de visite comportant des données professionnelles telles que l'entreprise, le titre du poste, une adresse url sur page web d'un site de mise en relation, etc. est stockée (les autres données pouvant être éliminées). Le contexte de rencontre peut être détecté par des éléments tels que l'événement dans l'agenda de l'utilisateur et l'heure et la date de cet événement où le contact a été rencontré (correspondant à l'entrée de ce contact dans le carnet d'adresses). Bien entendu, le contexte de rencontre peut, en variante, être choisi manuellement par l'utilisateur du terminal.

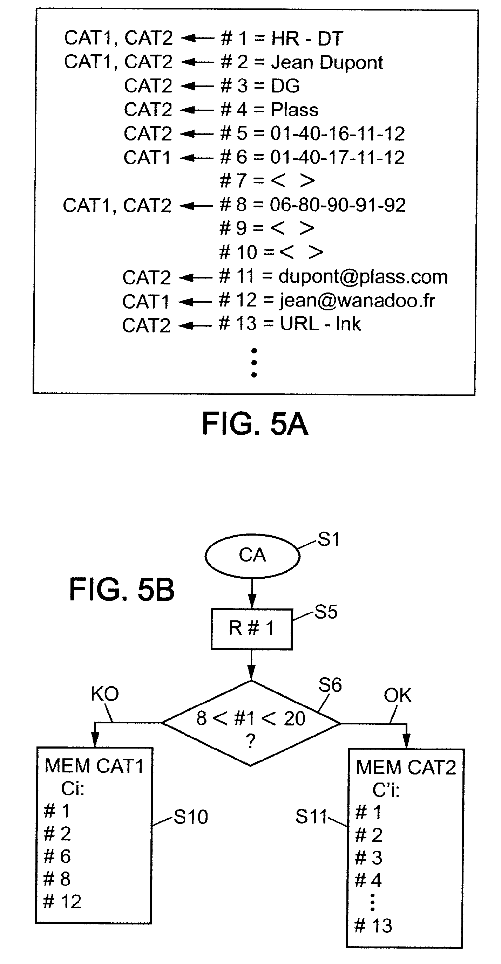

La figure 5B représente toutefois le cas où le traitement des données du contact est mis en oeuvre pour associer ce contact à une catégorie donnée. En référence à la figure 5A, les données d'horodate de rencontre du champ #1, de nom et prénom du contact du champ #2, ou encore de numéro de téléphone mobile, peuvent concerner aussi bien la catégorie des contacts personnels CAT1 que des contacts professionnels CAT2. En revanche, les champs #6 et #12 ne concernent que des données personnelles qui ont vocation à être stockées dans la catégorie CAT1. Le reste des champs ne comporte que des données à stocker en catégorie CAT2. En référence à la figure 5B, comportant les mêmes étapes que la figure 4 (avec les mêmes références S1, S5 et S6), le module de gestion des contacts détermine si l'horodate de rencontre correspond à une rencontre dans un cadre professionnel ou personnel (test S6) et pilote le stockage des données pertinentes dans la catégorie appropriée CAT2 ou CAT1 (respectivement à l'étape S11 ou à l'étape S10).

Dans une variante, les étapes S5 et S6 peuvent être simplement supprimées et les données de contact peuvent être filtrées pour être stockées en catégorie CAT1 (avec seulement les données des champs #1, #2, #6, #8 et #12) et en catégorie CAT2 (avec seulement les données des champs #1, #2, #3, #4, #5, #8, #11 et #13).

L'invention peut être mise en oeuvre dans le cadre d'un service offrant des fonctionnalités de socialisation, d'évolution de carnets d'adresses de clients, de gestion de profils, ou autre.

## Revendications

1. Procédé, mis en oeuvre par des moyens informatiques d'un premier terminal (B), de traitement de données de contact d'un utilisateur d'un deuxième terminal (A), **caractérisé en ce qu'**il comporte :
- une identification d'un groupe de données parmi lesdites données de contact, et
- le déclenchement d'une action auprès du premier terminal (B) en fonction du groupe de données identifiées.

2. Procédé selon la revendication 1, **caractérisé en ce que** lesdites données de contact sont destinées à être stockées dans un répertoire électronique du premier terminal (B).

3. Procédé selon la revendication 2, **caractérisé en ce qu'**il comporte :
- une reconnaissance, parmi lesdites données de contact, de données identifiant le deuxième terminal (A), et
- la formation d'un message destiné à être communiqué au deuxième terminal (A), en fonction des données identifiant le deuxième terminal.

4. Procédé selon la revendication 3, **caractérisé en ce que** le message formé comporte des données de contact d'un utilisateur du premier terminal (B).

5. Procédé selon l'une des revendications 3 et 4, **caractérisé en ce que** le message formé comporte une invitation à stocker, auprès du deuxième terminal (A), les données de contact de l'utilisateur du premier terminal (B).

6. Procédé selon l'une des revendications 3 à 5, **caractérisé en ce que** les données de contact de l'utilisateur du deuxième terminal (A') sont envoyées au premier terminal (C') par un tiers intermédiaire.

7. Procédé selon la revendication 6, **caractérisé en ce que** le tiers intermédiaire est un utilisateur d'un troisième terminal (B').

8. Procédé selon l'une des revendications 2 à 7, dans lequel le répertoire électronique du premier terminal (B) comporte une pluralité de catégories de contacts, **caractérisé en ce que** les données de contact de l'utilisateur du deuxième terminal (A) sont stockées dans une catégorie du répertoire électronique sélectionnée en fonction d'un instant d'entrée des données auprès du premier terminal (B), en vue d'un classement du contact dans le répertoire en fonction d'un contexte temporel d'entrée des données du contact.

9. Procédé selon la revendication 8, **caractérisé en ce qu'**il comporte :
- avant le stockage des données de contact de l'utilisateur du deuxième terminal (A) dans le répertoire électronique du premier terminal (B), une reconnaissance, parmi lesdites données de contact, de données identifiant au moins une horodate d'entrée auprès du premier terminal (B) des données de contact de l'utilisateur du deuxième terminal (A), et
- un stockage des données de contact de l'utilisateur du deuxième terminal (A) dans une catégorie du répertoire électronique sélectionnée en fonction de ladite horodate.

10. Procédé selon l'une des revendications 8 et 9, **caractérisé en ce qu'**il comporte une reconnaissance, parmi lesdites données de contact, d'un groupe de données non pertinentes par rapport à la catégorie sélectionnée, et une élimination desdites données non pertinentes de la catégorie sélectionnée.

11. Procédé selon la revendication 10, **caractérisé en ce que** les données non pertinentes sont stockées dans le répertoire, dans une catégorie (CAT2) distincte de ladite catégorie sélectionnée (CAT1).

12. Programme informatique comportant des instructions pour la mise en oeuvre du procédé selon l'une des revendications précédentes, lorsque ce programme est exécuté par un processeur.

13. Module de gestion de données de contacts dans un répertoire électronique d'un terminal, **caractérisé en ce qu'**il comporte :
- des moyens d'identification d'un groupe de données parmi des données d'un contact, et
- des moyens pour déclencher une action auprès du terminal (B) en fonction du groupe de données identifiées.

14. Serveur de gestion de contacts, comportant des moyens de stockage de bases de données de contact, et des moyens de gestion de transfert de données de contact entre terminaux d'utilisateurs, pour la mise en oeuvre du procédé selon l'une des revendications 1 à 11.
